# EUROPEAN PATENT APPLICATION

(11) **EP 4 325 420 A1**
(43) Date of publication of application: **21.02.2024**
(21) Application number: 22787960.8
(22) Date of filing: 23.03.2022
(51) Int. Cl.: G06Q 50/06, G06Q 20/04

(54) **ELECTRIC POWER TRANSACTION SYSTEM , AND ELECTRIC POWER TRANSACTION METHOD**

(30) Priority: 13.04.2021 JP 2021067727
(71) Applicant: Hitachi, Ltd., Tokyo 100-8280 (JP)
(72) Inventor: SHOMURA, Yusuke, Tokyo 100-8280 (JP); SUZUKI, Toshiaki, Tokyo 100-8280 (JP); SAITO, Nao, Tokyo 100-8280 (JP); ISHII, Yoshikazu, Tokyo 100-8280 (JP)
(74) Representative: Mewburn Ellis LLP
(86) International application number: PCT/JP2022/013511
(87) International publication number: WO 2022/220035

(57) **Abstract**

A power transaction system includes: a token generation unit that issues a power reservation token that is a right to use specific power that is power obtained by generating power using a specific type of energy; a power supply control unit that supplies power in exchange for the power reservation token; and a result token issuing unit that issues a result token indicating that the specific power supplied in exchange for the power reservation token is used.

## Description

### Technical Field

The present invention relates to a power transaction system and a power transaction method.

### Background Art

Various forms of power trading have been proposed. PTL 1 discloses a power transaction system in which a plurality of user systems that controls and manages power for each power consumption unit and an intermediary server that mediates trade of power are connected by a communication network. The user system includes a result data generation unit that measures an amount of power generated or consumed by each user during each power use period and generates result data. The intermediary server includes a token issuing unit that issues a power transaction token including a power use period, an amount of power, and a compensation amount based on the result data, a token canceling unit that cancels the power transaction token based on the result data, and a cooperation unit that records data related to issuance and cancellation of the power transaction token in cooperation with a guarantee system that stores at least part of data related to issuance and cancellation of the power transaction token. The guarantee system includes a plurality of nodes that stores at least part of the data generated by the user system and the intermediary server. The nodes aggregate the stored data at a predetermined timing to form blocks, form a blockchain using the blocks, share the blockchain among the plurality of nodes, and store the blockchain as a distributed ledger.

### Citation List

### Patent Literature

PTL 1: JP 2020-107200 A

### Summary of Invention

### Technical Problem

In the invention described in PTL 1, there is room for improvement in flexibility of power transaction.

### Solution to Problem

A power transaction system according to a first aspect of the present invention includes: a token generation unit that issues a power reservation token that is a right to use specific power that is power obtained by generating power using a specific type of energy; a power supply control unit that supplies power in exchange for the power reservation token; and a result token issuing unit that issues a result token indicating that the specific power supplied in exchange for the power reservation token is used.

A power transaction method according to a second aspect of the present invention includes: issuing a power reservation token that is a right to use specific power that is power obtained by generating power using a specific type of energy; providing power in exchange for the power reservation token; and issuing a result token indicating that the specific power supplied in exchange for the power reservation token is used.

### Advantageous Effects of Invention

According to the present invention, flexible and efficient power transaction can be realized.

### Brief Description of Drawings

[FIG. 1] FIG. 1 is an overall configuration diagram of a power transaction system according to a first embodiment.
[FIG. 2] FIG. 2 is a hardware configuration diagram of a plurality of devices.
[FIG. 3] FIG. 3 is a diagram illustrating types of tokens.
[FIG. 4] FIG. 4 is a diagram illustrating a main configuration of a power transaction system.
[FIG. 5] FIG. 5 is a diagram illustrating an example of a generated token management table.
[FIG. 6] FIG. 6 is a diagram illustrating an example of a reservation token management table.
[FIG. 7] FIG. 7 is a diagram illustrating an example of a token issuer management table.
[FIG. 8] FIG. 8 is a diagram illustrating an example of a purchase token management table.
[FIG. 9] FIG. 9 is a diagram illustrating an example of a demand device control management table.
[FIG. 10] FIG. 10 is a diagram illustrating an example of a supply device control management table.
[FIG. 11] FIG. 11 is a diagram visually illustrating an operation schedule.
[FIG. 12] FIG. 12 is a diagram illustrating an example of screen display by a reservation token display program.
[FIG. 13] FIG. 13 is a diagram illustrating time-series processing from issuance to settlement of a power reservation token.
[FIG. 14] FIG. 14 is a flowchart illustrating a schedule creation process by the demand management agent.
[FIG. 15] FIG. 15 is a flowchart illustrating short-term demand management processing by a demand management agent.
[FIG. 16] FIG. 16 is a flowchart illustrating a short-term power supply control process by the power supply control program.
[FIG. 17] FIG. 17 is a flowchart illustrating settlement processing by the token settlement program.
[FIG. 18] FIG. 18 is a diagram illustrating an example of a result token management table in a second modification.
[FIG. 19] FIG. 19 is an overall configuration diagram of a power transaction system according to a second embodiment.
[FIG. 20] FIG. 20 is a functional configuration diagram of the evaluation device.
[FIG. 21] FIG. 21 is a time chart illustrating an example of timing at which the evaluation device operates.
[FIG. 22] FIG. 22 is a diagram illustrating an example of an evaluation table.

### Description of Embodiments

### First Embodiment

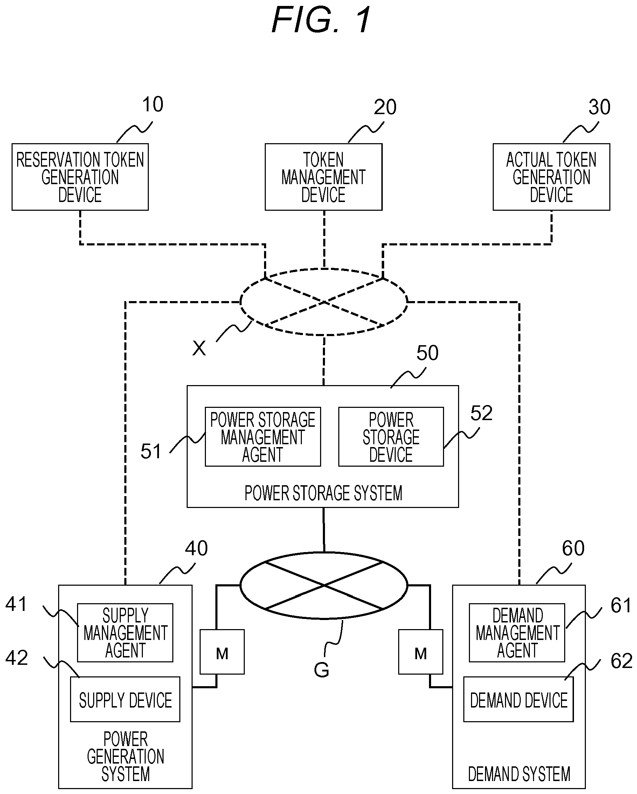

Hereinafter, a first embodiment of a power transaction system will be described with reference to FIGS. 1 to 17.

### (Definition of terms)

In this embodiment, the "type of power" indicates the type of energy used for power generation, and is, for example, solar power, wind power, wave power, geothermal power, natural gas, fossil fuel, hydraulic power, nuclear power, or the like. The "type of power" is also referred to as "power classification" or "power generation classification". In this embodiment, the unit time in the power transaction is referred to as a "time slot" or a "time frame". The unit time is, for example, 15 minutes.

In this embodiment, the "token" is electronic data which is created in a predetermined format and whose integrity is secured. A specific method for ensuring the integrity is not limited, and various known methods can be used. In this embodiment, blockchain technology is used to ensure integrity. However, in this embodiment, for convenience of description, it is described as if the token is data that can be occupied, and the process of rewriting the ownership of a certain token from A to B is described as "A transfers the token to B".

### (Overall configuration)

FIG. 1 is an overall configuration diagram of a power transaction system S in a first embodiment. The power transaction system S includes a reservation token generation device 10, a token management device 20, a result token generation device 30, a power generation system 40, a power storage system 50, and a demand system 60. Although each configuration is illustrated one by one in FIG. 1 for convenience of drawing, two or more of each configuration may be provided. In particular, in this embodiment, there is a plurality of reservation token generation devices 10. Time is synchronized in all the devices constituting the power transaction system S, and a period and a starting period of time slots are common.

In FIG. 1, a solid line indicates a flow of electric power, and a broken line indicates a flow of information. That is, the respective components of the power transaction system S described above are connected to each other via a network X. In addition, the power generation system 40, the power storage system 50, and the demand system 60 are connected to each other via a power grid G.

The power generation system 40 includes a supply management agent 41 that handles information and a supply device 42 that supplies power. A smart meter M capable of recording the power supplied to the power grid G in time series is attached to each of the supply devices 42. The power storage system 50 includes a power storage management agent 51 that handles information and a power storage device 52 that controls power. The demand system 60 includes a demand management agent 61 that handles information and a demand device 62 that consumes power. In this embodiment, the power generation system 40 is associated with any reservation token generation device 10 in advance. The entire amount of power generated by a certain power generation system 40 is sold by the associated reservation token generation device 10, and the reservation token generation device 10 can control the power generation system 40 as necessary.

An operation outline of each configuration illustrated in FIG. 1 will be described. The reservation token generation device 10 issues a power reservation token and commands the power generation system 40 and the power storage system 50 to supply power corresponding to the issued power reservation token. The token management device 20 temporarily acquires the power reservation token issued by the reservation token generation device 10 and transfers the power reservation token to the consumer. In addition, the token management device 20 transmits the result token indicating that the power used by the consumer was a desired type of power to the consumer.

The result token generation device 30 generates a result token. The supply management agent 41 of the power generation system 40 causes the supply device 42 to generate power based on a command from the reservation token generation device 10 and causes the power grid G to output power. The supply devices 42 are various power generation devices, and include, for example, a solar power generation device, a wind power generation device, a wave power generation device, a geothermal power generation device, a thermal power generation device, a hydraulic power generation device, and the like.

The power storage management agent 51 of the power storage system 50 outputs the power stored in the power storage device 52 to the power grid G based on the command from the reservation token generation device 10. The power storage management agent 51 of the power storage system 50 may acquire the power reservation token based on its own determination, for example, a processing result of a predetermined algorithm, and store the power in the power storage device 52. In addition, the power storage management agent 51 may store power in the power storage device 52 based on an instruction from the outside. The power storage device 52 is a battery that stores electric energy, a combination of a dam and a hydraulic generator that store electric energy as another type of energy, or the like.

The demand management agent 61 of the demand system 60 acquires the power reservation token from the token management device 20 based on the operation plan of the demand device 62. The demand device 62 is supplied with power via the power grid G. A smart meter M capable of recording power supplied from the power grid G in time series is attached to each of the demand devices 62.

### (Hardware configuration)

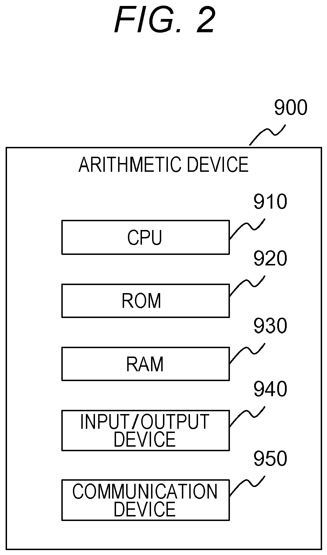

FIG. 2 is a hardware configuration diagram of the reservation token generation device 10, the token management device 20, the result token generation device 30, the supply management agent 41, the power storage management agent 51, and the demand management agent 61. Here, a hardware configuration common to the reservation token generation device 10, the token management device 20, the result token generation device 30, the supply management agent 41, the power storage management agent 51, and the demand management agent 61 will be described as a configuration of an arithmetic device 900.

The arithmetic device 900 includes a CPU 910 which is a central processing unit, a ROM 920 which is a read-only storage device, a RAM 930 which is a readable/writable storage device, an input/output device 940, and a communication device 950. The CPU 910 develops a program stored in advance in the ROM 920 in the RAM 930 and executes the program to perform processing described later. The input/output device 940 includes a mouse, a keyboard, and the like with which the operator inputs information to the arithmetic device 900, a liquid crystal display that presents information to the operator, and the like. The communication device 950 is a device for communicating with another device via the network X, for example, a network interface card or a wireless communication module.

The arithmetic device 900 may include a field programmable gate array (FPGA) that is a rewritable logic circuit or an application specific integrated circuit (ASIC) that is an application specific integrated circuit instead of the combination of the CPU 910, the ROM 920, and the RAM 930. In addition, the arithmetic device 900 may be realized by a combination of different configurations, for example, a combination of the CPU 910, the ROM 920, the RAM 930, and the FPGA, instead of the combination of the CPU 910, the ROM 920, and the RAM 930.

### (Type of token)

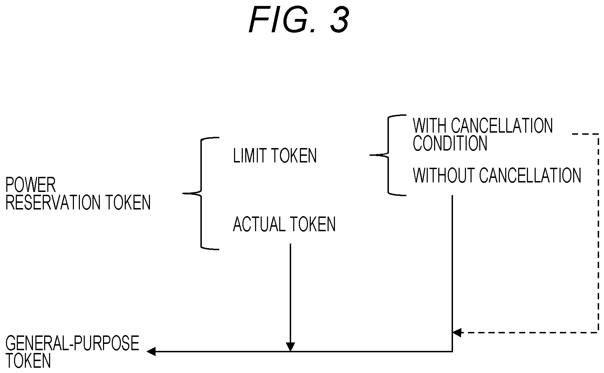

FIG. 3 is a diagram illustrating types of tokens in this embodiment. The token in this embodiment is roughly divided into a power reservation token and a result token. The result token will be described later.

The power reservation token is classified into a limit token and a general-purpose token. The limit token is a power reservation token in which a period during which power can be used is limited to a specific date and time. The general-purpose token is a power reservation token that can be used for general purpose without setting a date and time when power can be used. However, in both the limit token and the general-purpose token, the length of time during which the power is available is a time slot that is a predetermined time frame, for example, in units of 15 minutes. The general-purpose token needs to be validated before being used. In addition, the power amount and the electrical capacity of both the limit token and the general-purpose token are determined in advance.

The limit token is further classified into a "limit token with cancellation condition" and a "limit token without cancellation" depending on the presence or absence of the cancellation condition. Cancellation is forcible cancellation of the contract by the issuer of the limit token, and when the contract is cancelled, the consumer who has acquired the limit token cannot use power. Note that, in a case where the issuer cancels the limit token, the compensation to the person who has acquired the token is performed by a prior agreement. In a case where the limit token with cancellation condition is acquired, there is a case where power cannot be used due to cancellation, or there is a case where power can be used without being cancelled.

Hereinafter, the limit token without cancellation and the general-purpose token are also collectively referred to as a "non-conditional token", and the limit token with cancellation condition is also referred to as a "conditional token". Conditional tokens have uncertain conditions to receive power supply, and non-conditional tokens are unconditionally supplied with power.

The result token is information indicating that a specific type of power has been supplied and used. The result token is finally transmitted to the consumer who has acquired the power reservation token and consumed power. That is, in a case where a limit token with cancellation condition is acquired and the token is cancelled, the result token corresponding to the limit token with cancellation condition is not issued. Conversely, a result token is issued in a case where the general-purpose token is acquired and used, in a case where the limit token without cancellation is acquired, and in a case where the limit token with cancellation condition is acquired but is not cancelled.

### (Detailed configuration)

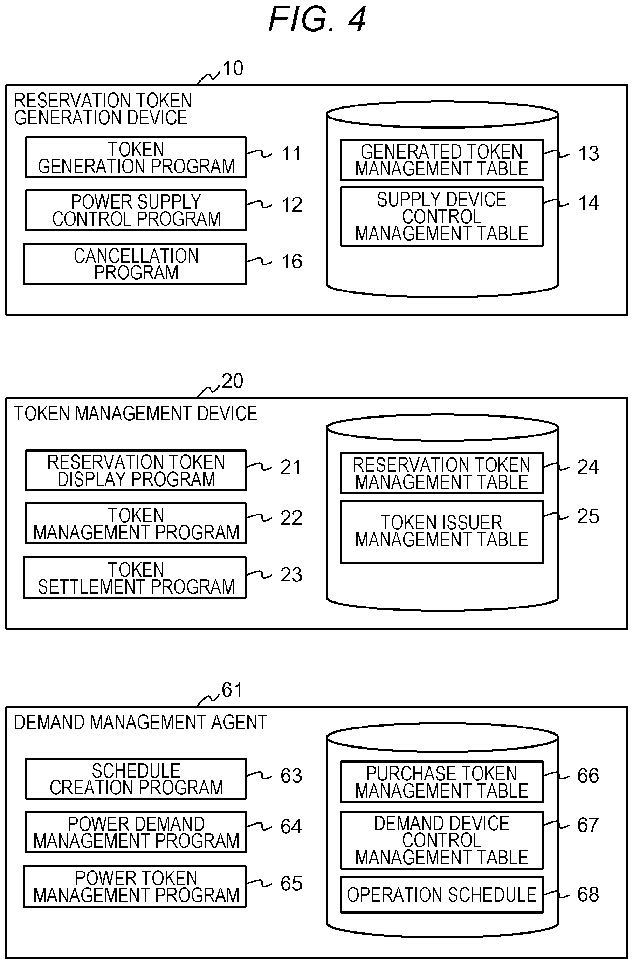

FIG. 4 is a diagram illustrating a main configuration of the power transaction system S. The reservation token generation device 10 includes a token generation program 11, a power supply control program 12, a supply device control management table 14, a generated token management table 13, a device control management table 15, and a cancellation program 16. Hereinafter, the token generation program 11, the power supply control program 12, and the cancellation program 16 are also referred to as a "token generation unit", a "power supply control unit", and a "cancellation unit", respectively.

Information on the power reservation token generated by the token generation program 11 is stored in the generated token management table 13. The supply device control management table 14 stores information on power generation and power storage of the supply device 42 and the power storage device 52 which are facilities to which the token generation program 11 issues the power reservation token. The stored information is, for example, a power generation classification, a power generation capacity, a power generation cost, and the like in the case of the supply device 42, and is a power generation classification, a discharge capacity, a current storage amount, and the like in the case of the power storage device 52.

The token generation program 11 issues a power reservation token and transmits the power reservation token to the token management device 20. The power reservation token issued by the token generation program 11 may be at least one of the limit token and the general-purpose token, and the presence or absence of cancellation of the limit token may be mixed. The token generation program 11 may issue the power reservation token based on its own determination, or may issue the power reservation token based on an instruction from the supply management agent 41 or the power storage management agent 51. In a case where the token generation program 11 issues the power reservation token, the power reservation token corresponding to the power generation capacity is issued for each of the supply devices 42 described in the supply device control management table 14. For example, thermal power generation or the like in which the amount of power generation can be arbitrarily controlled issues a power reservation token corresponding to a capacity of 70% of the power generation capacity, and solar power generation or wind power generation in which the upper limit of the amount of power generation is limited by weather or the like issues a power reservation token corresponding to a capacity of 300 of the power generation capacity. However, the token generation program 11 may estimate a power generation amount of solar power generation, wind power generation, or the like with reference to a weather forecast, past statistics, or the like, and determine the sum of the power generation capacities of the power reservation tokens to be issued based on the estimation.

The cancellation program 16 performs cancellation processing on the power reservation token generated by the token generation program 11 as necessary. Specifically, the cancellation program 16 determines the power reservation token to be cancelled, notifies the token management device 20 of the determined power reservation token, and describes that the token has been cancelled in the generated token management table 13. For example, the cancellation program 16 calculates the power generation capacity in a predetermined time slot using the renewable energy based on the latest weather forecast, and when the total of the sold power generation capacities described in the generated token management table 13 exceeds the calculated power generation capacity, cancels the power reservation token corresponding to the excess.

The power supply control program 12 instructs the supply of power so as to satisfy the sum of the power capacities of the sold power reservation tokens for each time slot and for each power type. The power supply control program 12 calculates, for each power type, a power capacity (hereinafter, referred to as "necessary power capacity") obtained by subtracting the sum of the power capacities of the limit tokens cancelled by the cancellation program 16 from the sum of the power capacities of the sold limit tokens in the specific time slot and the sum of the power capacities of the general-purpose tokens of which the use has been notified. Then, the power supply control program 12 procures power when the sum of the power generation capacities of the supply devices 42 is smaller than the necessary power capacity.

The token management device 20 includes a reservation token display program 21, a token management program 22, a token settlement program 23, a reservation token management table 24, and a token issuer management table 25. Hereinafter, the reservation token display program 21, the token management program 22, and the token settlement program 23 are also referred to as a "reservation token display unit", a "token management unit", and a "token settlement unit", respectively.

The reservation token display program 21 is a program that provides information stored in the reservation token management table 24 to the outside. In a case where the information provision destination is a computer, the information may be provided in a predetermined format, for example, an XML format so as to facilitate machine processing, or in a case where the reservation token management table 24 is implemented as a database, an API interface capable of searching the database may be used. When the information provision destination is a human, a list of all the information stored in the reservation token management table 24 may be provided, or a search interface and a search result that can search for the information stored in the reservation token management table 24 may be provided.

The token management program 22 receives the power reservation token from the reservation token generation device 10, allocates the power reservation token to the demand management agent 61, and writes the power reservation token to the reservation token management table 24. Note that the token management program 22 may be configured integrally with the reservation token display program 21. The token settlement program 23 operates after the power based on the power reservation token is used, and finally transmits the result token to the demand management agent 61. The operation of the token settlement program 23 will be described in detail later.

The demand management agent 61 of the demand system 60 includes a schedule creation program 63, a short-term demand management program 64, a power token management program 65, a purchase token management table 66, a demand device control management table 67, and an operation schedule 68. Hereinafter, the power token management program 65 is also referred to as a "token management unit".

The schedule creation program 63 secures the minimum necessary power capacity for the demand device 62 for each time slot and updates the operation schedule 68. The short-term demand management program 64 manages power demand in a short period of time, specifically in one time slot. Since the schedule creation program 63 described above manages power demand in a plurality of time slots, the schedule creation program 63 can also be referred to as a "long-term demand management program" from the viewpoint of comparison with the short-term demand management program 64.

The power token management program 65 receives the result token and stores the received result token in a nonvolatile storage device. The purchase token management table 66 stores information on the purchased power reservation token. The demand device control management table 67 stores an identifier of the demand device 62 and information on control. The operation schedule 68 stores information regarding the operation of the demand device 62 for each time slot.

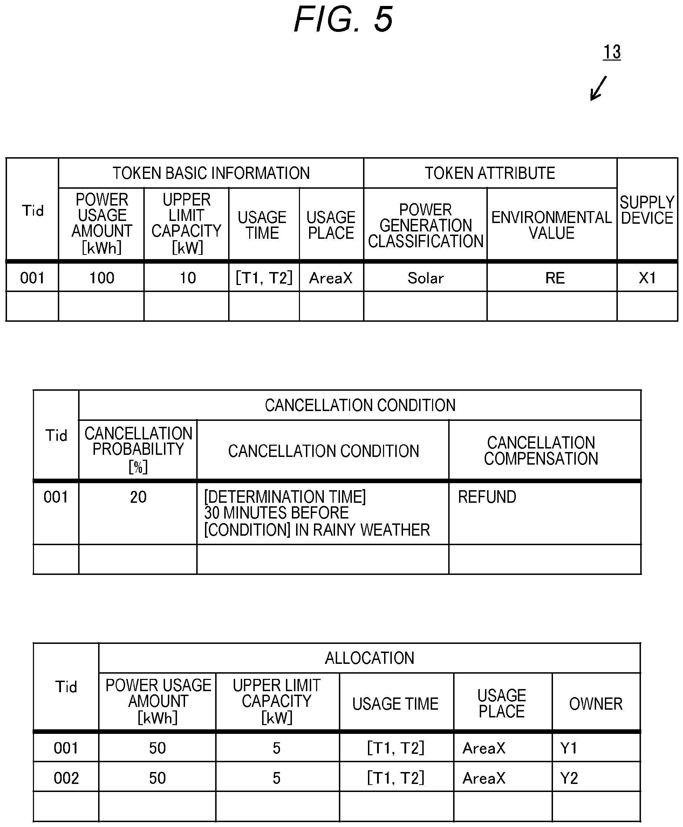

FIG. 5 is a diagram illustrating an example of the generated token management table 13. The generated token management table 13 has a plurality of records, and each record includes a token ID, token basic information, a token attribute, a supply device, a cancellation condition, and information of allocation. Information transmitted from the token management device 20 is stored in "allocation" of the generated token management table 13, and information output by the token generation program 11 is stored in another portion of the generated token management table 13. Since the generated token management table 13 is a horizontally long table, the table is illustrated in three rows in FIG. 5 for convenience of drawing, and only the token ID is described in the preceding stage in order to clearly indicate the same record.

The "token ID" is described as "Tid" in the drawings for convenience of drawing, and is an identifier for identifying the power reservation token. The "token basic information" includes information of "power usage amount" which is a value obtained by integrating available power with time, "upper limit capacity" which is maximum power consumption, "usage time" indicating a time slot, and "usage place" which is a power supply area. The "usage time" may be substituted by an identifier indicating a time slot. The "token attribute" includes a "power generation classification" indicating the type of electricity and an "environmental value" indicating a value from the viewpoint of environmental protection.

In the token generation program 11, when the supply device 42 uses the renewable energy, the power generation amount greatly changes depending on the weather, and thus, the "power usage amount" and the "upper limit capacity" may be values smaller than the maximum power generation capacity of the supply device 42. As the "environmental value", for example, either a value of "RE" indicating renewable energy or a value of "NOT" indicating non-renewable energy is input.

The "supply device" is identification information of the supply device 42 that supplies the power described in the record. The token generation program 11 including the "cancellation condition", which is a criterion of the cancellation probability, the "cancellation condition", which is a criterion of the cancellation condition, and the "cancellation compensation", which is the compensation at the time of cancellation, can calculate the "cancellation probability" using, for example, the past statistics of the supply device 42.

In the "allocation", information transmitted from the token management device 20 is stored, and information on the power usage amount, the upper limit capacity, the usage time, the usage place, and the owner is stored. Among them, information of the same type as the token basic information is stored except for "owner", and any value does not exceed the token basic information. "Owner" is identification information of the demand system 60 that has acquired the power reservation token of the record.

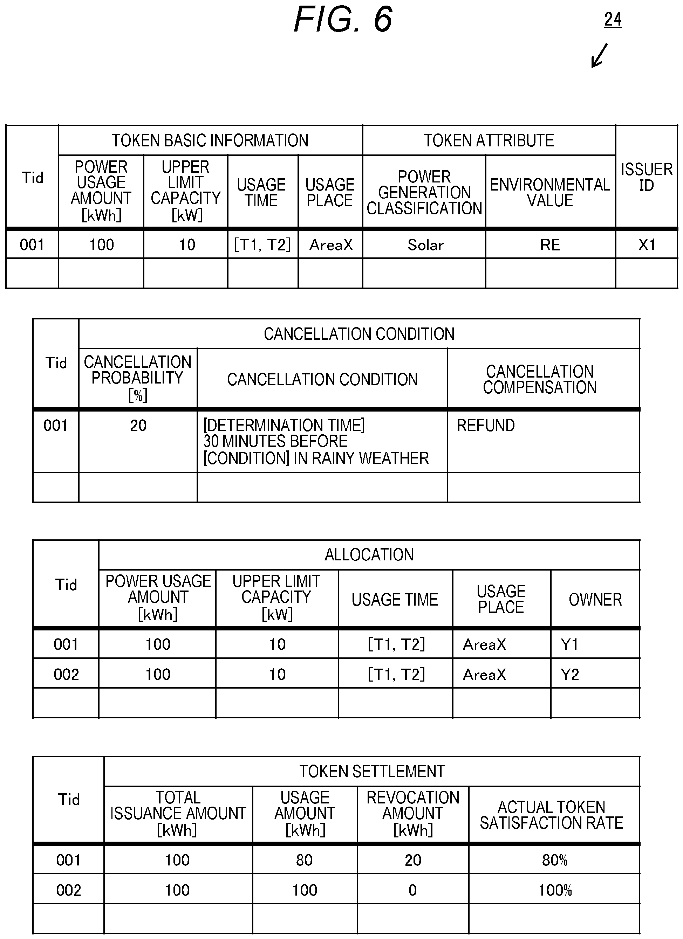

FIG. 6 is a diagram illustrating an example of the reservation token management table 24. The reservation token management table 24 has a plurality of records, and each record includes information of a token ID, token basic information, a token attribute, an issuer ID, a cancellation condition, allocation, and token settlement. Since the reservation token management table 24 is a horizontally long table, the table is illustrated in four rows in FIG. 6 for convenience of drawing, and only the token ID is described in the preceding stage in order to clearly indicate the same record. The token management program 22 receives information of one record of the generated token management table 13 illustrated in FIG. 5 from the reservation token generation device 10 as information of a newly created power reservation token. However, the received information may not include the information of the "supply device". Most of the information illustrated in FIG. 6 is similar to that in FIG. 5, and thus, redundant description will be omitted.

The "issuer ID" not included in FIG. 5 is an identifier indicating the entity that has issued the power reservation token, that is, the operating entity of the reservation token generation device 10. However, in this embodiment, since the reservation token generation device 10 itself is treated as an operating entity, that is, an issuer, the "issuer ID" is an identifier for specifying the reservation token generation device 10 that has issued the power reservation token. Since the token management program 22 receives the identifier of the reservation token generation device 10 that has issued the power reservation token together with the information of the power reservation token, this value is recorded as the "issuer ID".

In the "token settlement" unique to FIG. 6 and not included in FIG. 5, writing is performed in the settlement phase. The "token settlement" includes the total issuance amount, the usage amount, the revocation amount, and the result token satisfaction rate. The "total issuance amount" is the amount of power described in the issued power reservation token, and is the same as the "power usage amount" of the "token basic information". The "usage amount" is an amount of power actually supplied by the supply device 42 in the corresponding time slot, and the output of the smart meter M is used. The "revocation amount" is a value obtained by subtracting the "usage amount" from the "total issuance amount". The "result token satisfaction rate" is a ratio of the power supplied to the demand device 62, and is calculated as a ratio of the "usage amount" to the "total issuance amount".

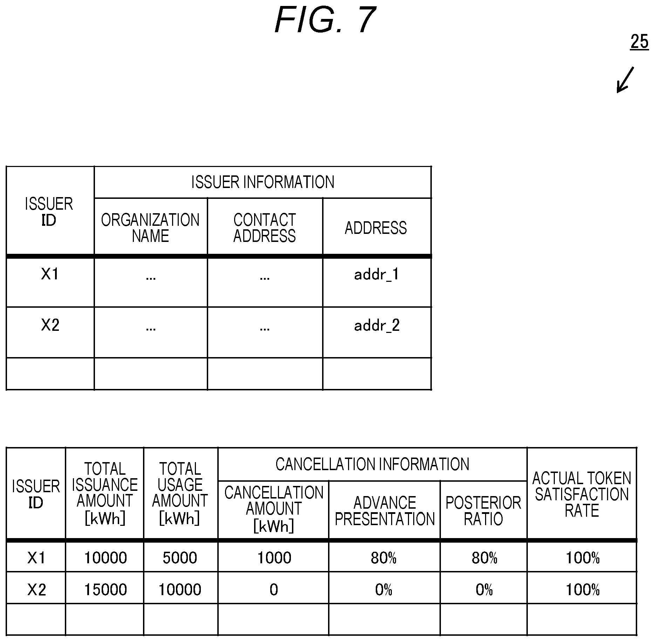

FIG. 7 is a diagram illustrating an example of the token issuer management table 25. The token issuer management table 25 has a plurality of records, and each record includes an issuer ID, issuer information, a total issuance amount, a total usage amount, cancellation information, and a result token satisfaction rate. Since the token issuer management table 25 is a horizontally long table, the table is illustrated in two rows in FIG. 5 for convenience of drawing, and only the issuer ID is described in the preceding stage in order to clearly indicate the same record.

The "issuer ID" is an identifier that identifies the issuer of the power reservation token, that is, the reservation token generation device 10 in this embodiment. The "issuer information" includes an "organization name" which is a name of an issuer, a "contact address" such as a telephone number or an e-mail address, and an "address" which is a location. The "total issuance amount" is the sum of the power usage amounts of the power reservation tokens issued by the issuer so far. The "total usage amount" is the sum of the amounts of power supplied by the issuer so far and used for each demand system 60.

The "cancellation information" includes a cancellation amount, advance presentation, and a posterior ratio. The "cancellation amount" is the sum of the amounts of power cancelled by the issuer so far. The "advance presentation" is an average value of the "cancellation probability" presented by the issuer so far. The "posterior ratio" is an average value of the ratios that the issuer has actually cancelled so far. The "result token satisfaction rate" is a ratio between a value obtained by subtracting the cancelled power amount from the power usage amount and the power amount actually supplied by the supply device 42. In the example of the token ID "001" illustrated in FIG. 6, although 100 kWh should be supplied, only 80 kWh could be supplied, and thus the "result token satisfaction rate" was calculated to be "80%". Note that, in this case, cancellation was not performed at all until the start of the corresponding time slot.

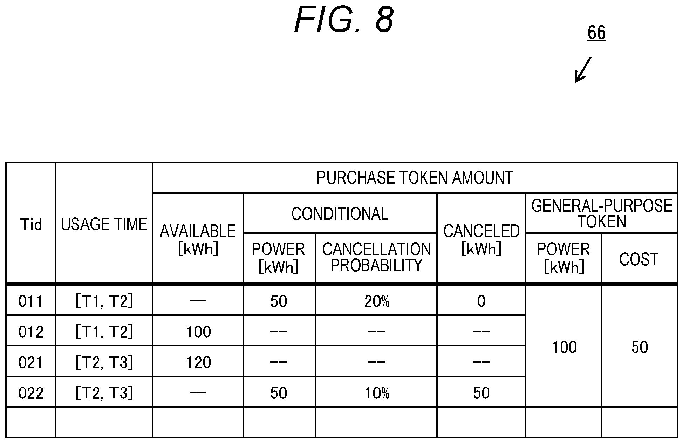

FIG. 8 is a diagram illustrating an example of the purchase token management table 66. The purchase token management table 66 includes a plurality of records, and each record includes a token ID, a usage time, and a purchase token amount. Since the token ID and the usage time have been described so far, the description thereof is omitted here. The purchase token amount includes "available" that is power that is reliably available without a possibility of cancellation, "conditional" that is power that is likely to be cancelled, "cancelled" indicating power that has already been cancelled out of the "conditional", and a purchased "general-purpose token" that is not the limit token.

The first record shown in FIG. 8 shows that the token ID is "011", which includes 50 kWh of power that may be cancelled between the times "T1" and "T2", and is not cancelled at the present moment. In the second record illustrated in FIG. 8, the token ID is "012", the available period is "T1" to "T2" similarly to the first record, and 100 kWh of power of the limit token that is not cancelled is included. That is, in the example shown in FIG. 8, it can be seen that 150 kWh can be currently used at times "T1" to "T2". Furthermore, since the general-purpose token 100 kWh is described at the right end, this power can also be used as necessary.

In the third and fourth records illustrated in FIG. 8, information of acquired tokens at times "T2" to "T3" is described, and the conditional power has been cancelled. Therefore, only 120 kWh which is not conditional can be used at times "T2" to "T3".

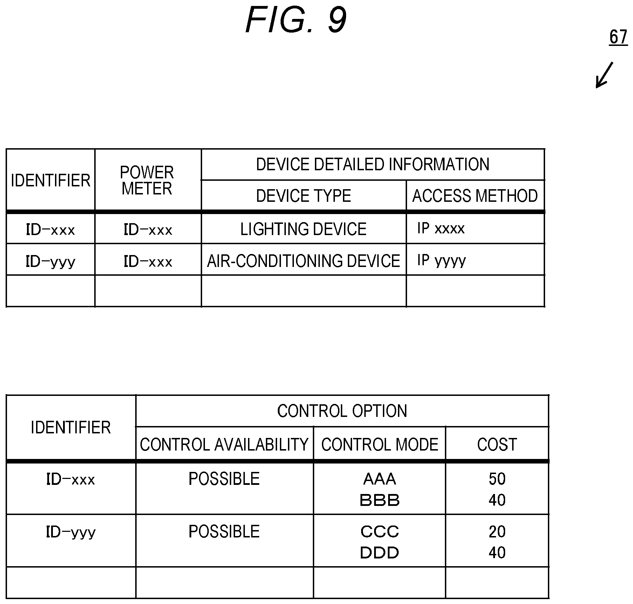

FIG. 9 is a diagram illustrating an example of the demand device control management table 67. In the demand device control management table 67, information regarding control and management of the demand device 62 is described. The demand device control management table 67 is composed of a plurality of records, and each record includes an identifier, a power meter, device detailed information, and a control option. "Identifier" is an identifier of the demand device 62 described in the record. The "power meter" is an identifier of a power meter that measures power used by the demand device 62 described in the record.

The "device detailed information" includes a device type and an access method. "Device type" is a type of the demand device 62 described in the record. The "access method" is an access method for controlling the demand device 62, and is, for example, an IP address of the demand device 62.

The "control option" includes control availability, a control mode, and cost. "Control availability" is whether the control of the demand device 62 can be changed. "Control mode" is a list of control modes that can be set in the demand device 62. In FIG. 9, only two control modes are illustrated for convenience of drawing, but three or more control modes may be illustrated. The "cost" is a cost for executing the corresponding "control mode". The first record illustrated in FIG. 9 describes that the control mode "AAA" requires a cost of "50" and the control mode "BBB" requires a cost of "40".

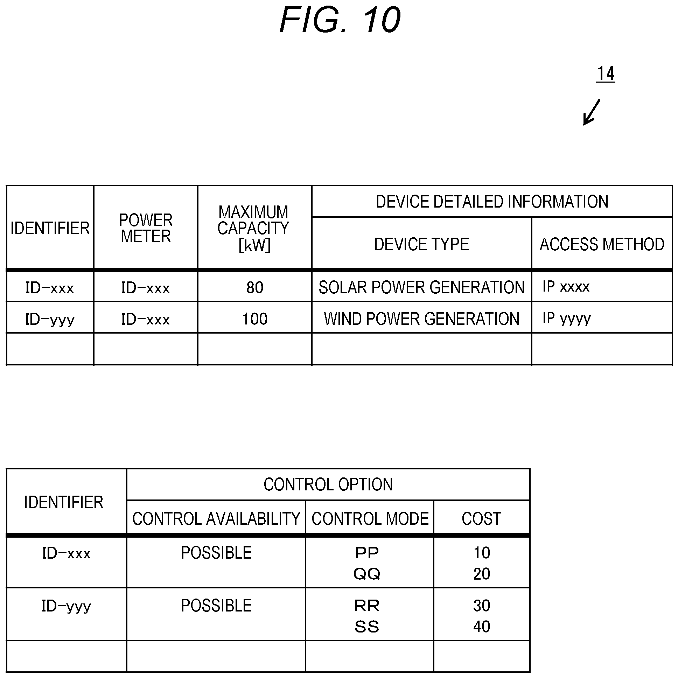

FIG. 10 is a diagram illustrating an example of the supply device control management table 14. The difference between the supply device control management table 14 and the demand device control management table 67 will be mainly described. The supply device control management table 14 further has a field of "maximum capacity" as compared with the demand device control management table 67. The "maximum capacity" is the maximum capacity that the supply device 42 can supply.

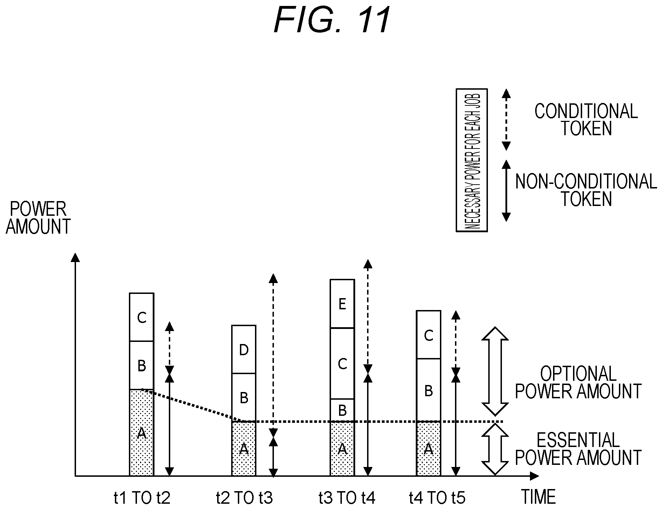

FIG. 11 is a diagram visually illustrating the operation schedule 68. In FIG. 11, the horizontal axis represents the time axis, and the vertical axis represents the amount of power. In the operation schedule 68, information of the power required by the job and the acquired power reservation token is stored for each time slot. Furthermore, each job includes information indicating whether execution is essential, and the power reservation token is distinguished by the presence or absence of the cancellation condition.

In FIG. 11, a job that is required to be executed is indicated by hatching, and a job that is not required to be executed is indicated without hatching. The height of the bar graph showing each job indicates the required amount of power. As illustrated in the legend at the upper right of FIG. 11, the power amounts of the conditional token, that is, the general-purpose token validated by specifying the time and the limit token without cancellation are represented by solid lines, and the power amount of the conditional token, that is, the limit token with cancellation condition is represented by broken lines.

In the example illustrated in FIG. 11, information regarding four time slots is illustrated, and execution of only job A is essential in any time slot. In the time slot from time t1 to time t2, the amount of power secured in advance by the token is smaller than the total amount of power required by the jobs A to C. However, there is no problem because the power amount of the non-conditional token is larger than the power amount of the job A that needs to be executed. In the time slot from time t2 to time t3, the amount of power secured in advance by the token is larger than the total amount of power required by the jobs A, B, and D. However, since the power amount of the non-conditional token is smaller than the power amount of the job A that needs to be executed, it is necessary to take measures.

### (Management screen)

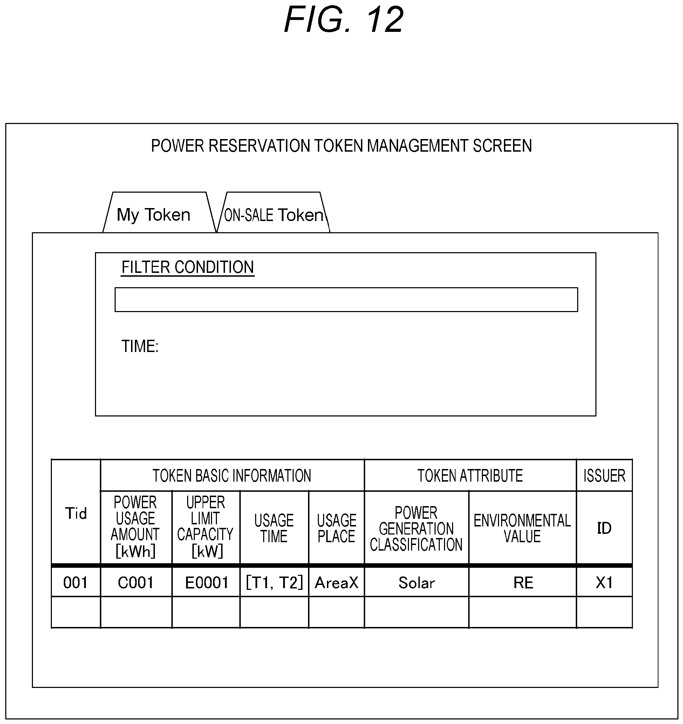

FIG. 12 is a diagram illustrating an example of screen display by the reservation token display program 21. As described above, the reservation token display program 21 provides the information stored in the reservation token management table 24. For example, the reservation token display program 21 identifies the demand management agent 61 that has accessed the token management device 20, displays a list of power reservation tokens purchased by the demand management agent 61 in a tab of "My Token", and displays a new transferable token in a tab of "On-sale Token". Further, the reservation token display program 21 may be configured to be able to input or select a "filter condition" that defines a condition of the power reservation token to be displayed.

### (Time chart)

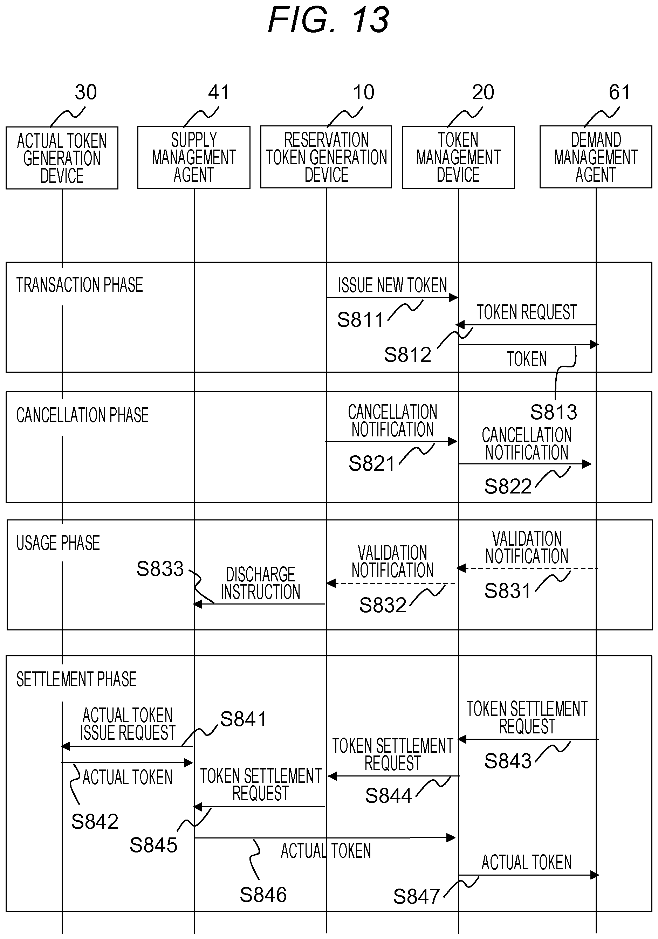

FIG. 13 is a diagram illustrating time-series processing from issuance of the power reservation token to settlement. This time-series processing is executed in the order of the transaction phase, the cancellation phase, the usage phase, and the settlement phase.

In the transaction phase, first, the token generation program 11 of the reservation token generation device 10 newly issues a power reservation token and transmits the power reservation token to the token management device 20 (S811). When the token management device 20 receives the power reservation token, the token management program 22 adds information of the received power reservation token to the reservation token management table 24. The reservation token display program 21 of the token management device 20 provides the information stored in the reservation token management table 24 to the demand management agent 61, and the demand management agent 61 requests one of the power reservation tokens (S812). The token management program 22 provides the power reservation token in response to a request from the demand management agent 61 (S813). The above is the transaction phase.

In the cancellation phase, the cancellation program 16 of the reservation token generation device 10 determines the necessity of cancellation for each limit token and transmits information on the limit token to be cancelled to the token management device 20 (S821). At this time, the cancellation program 16 writes information of the cancelled limit token in the generated token management table 13. The token management device 20 writes the received information of the limit token to be cancelled in the reservation token management table 24, and notifies the demand management agent 61 that owns the limit token that the limit token is cancelled (S822). Upon receiving this information, the demand management agent 61 updates the purchase token management table 66. The above is the cancellation phase.

In the usage phase, the first two processes are required when the general-purpose token is used. That is, in a case where the general-purpose token is used, the demand management agent 61 transmits a validation notification for validating the general-purpose token to the token management device 20 (S831). The validation notification includes information on the identifier of the token and the time at which the use is started. Upon receiving the validation notification, the token management device 20 writes the information in the reservation token management table 24 and transmits the same validation notification to the reservation token generation device 10 (S832).

The reservation token generation device 10 first records the received validation notification in the generated token management table 13. Next, the power supply control program 12 of the reservation token generation device 10 extracts the limit token in which the current time slot is set to the usage time and the general-purpose token whose activation is notified for the current time slot. Then, the power supply control program 12 instructs the supply management agent 41 corresponding to the extracted limit token and the general-purpose token to discharge (S833).

In the settlement phase, S841 to S842 and S843 to S845 proceed in parallel. For example, the supply management agent 41 transmits a result token issue request to the result token generation device 30 every time the time slot ends (S841). The result token issue request includes the identifier of the power reservation token and the amount of power supplied.

The result token generation device 30 that has received the result token issue request issues the result token after confirming that power has been supplied (S842). For example, the result token generation device 30 refers to the time series data of the smart meter M attached to the supply device 42 corresponding to the supply management agent 41, and confirms that the reported power supply has been performed. The result token includes a token ID of a corresponding power reservation token, an issuer ID that is an identifier identifying the reservation token generation device 10 that has issued the power reservation token, a type of power, a time slot or a date and time when power is supplied, and information of a power amount. The result token generation device 30 makes an inquiry to the token management device 20 using the identifier of the power reservation token included in the received result token issue request, specifies the issuer and the power classification, and uses them for issuing the result token.

For example, the demand management agent 61 transmits a token settlement request to the token management device 20 every time the time slot ends (S843). The token settlement request includes the identifier of the power reservation token and the power usage. Upon receiving the token settlement request, the token management device 20 searches the reservation token management table 24 using the identifier of the power reservation token included in the received token settlement request, and specifies the reservation token generation device 10 that has generated the power reservation token. Then, the token management device 20 transmits the received token settlement request to the specified reservation token generation device 10 (S844).

Upon receiving the token settlement request, the reservation token generation device 10 searches the reservation token management table 24 using the identifier of the power reservation token included in the received token settlement request, and identifies the supply management agent 41 that was scheduled to supply the power corresponding to the power reservation token. Then, the token management device 20 transmits the received token settlement request to the specified supply management agent 41 (S845).

When both S842 and S845 are completed, the supply management agent 41 transmits the result token to the token management device 20 (S846). The token management device 20 that has received the result token transmits the result token to the demand management agent 61. The above is the processing of the settlement phase.

### (Flowchart)

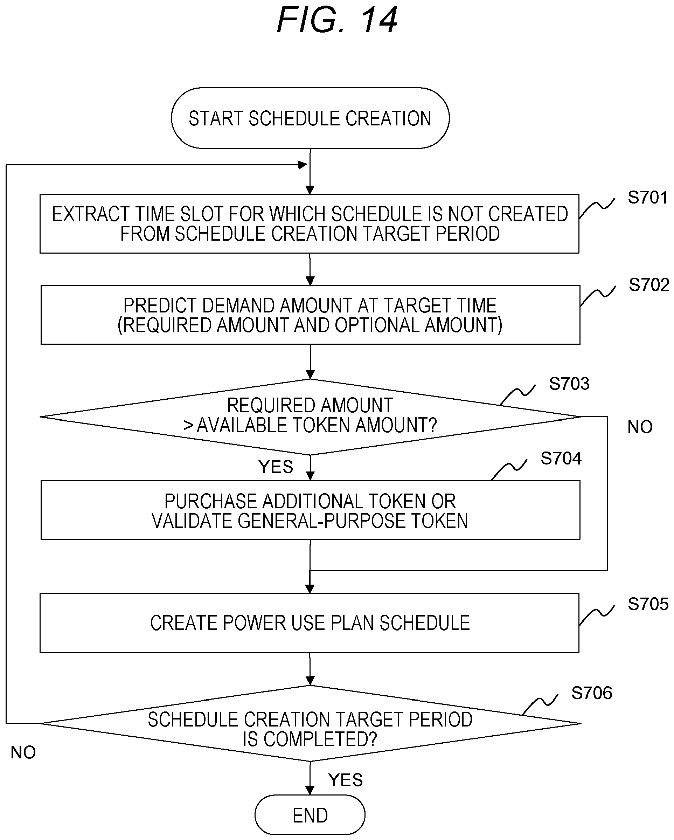

FIG. 14 is a flowchart illustrating a schedule creation process executed by the demand management agent 61 after completion of the transaction phase and before the usage phase is started. In step S701, the demand management agent 61 refers to the operation schedule 68 and extracts a time slot in which no schedule is created in a schedule creation target period, for example, a time slot within 24 hours from the current time. Hereinafter, a time slot for which a schedule is not created in the schedule creation target period is referred to as a "target time slot".

In subsequent step S702, the demand management agent 61 predicts a job to be executed in the target time slot, whether execution of each job is essential, and the amount of power required by each job. Various known methods can be used for this prediction, and for example, the execution history and the power consumption of the job at the same time one day before may be referred to.

In subsequent step S703, the demand management agent 61 determines whether the required amount of power in the target time slot exceeds the available token amount. Specifically, the demand management agent 61 compares the expected power amount to be used by the job that needs to be executed in the target time slot with the power amount of the non-conditional token in the target time slot, and determines whether the former exceeds the latter. The demand management agent 61 proceeds to step S704 in order to compensate for the shortage when making an affirmative determination, and proceeds to step S705 when making a negative determination.

In step S704, the demand management agent 61 additionally purchases the non-conditional token or validates the general-purpose token so that the amount of available tokens in the target time slot exceeds the required power. In subsequent step S705, the demand management agent 61 creates a power use plan schedule in the target time slot. Specifically, the demand management agent 61 writes the prediction result of step S702 and the information of the power reservation token in the operation schedule 68. In subsequent step S706, the demand management agent 61 determines whether all the schedules in the schedule creation target period have been created. The process returns to step S701 when it is determined that there is a schedule that has not been created, and the process of FIG. 14 is completed when it is determined that all the schedules have been created.

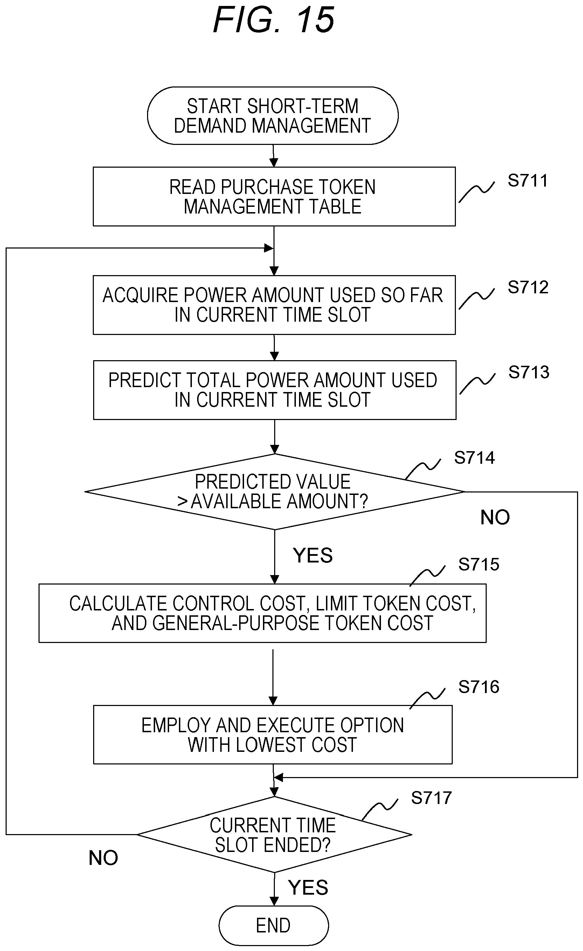

FIG. 15 is a slow chart illustrating the short-term demand management process executed by the demand management agent 61 after S833 in the usage phase. In this short-term demand management process, the demand device 62 secures necessary power by focusing on the current time slot. In step S711, the demand management agent 61 reads the purchase token management table 66. In subsequent step S712, the demand management agent 61 acquires the amount of power used so far in the current time slot from the smart meter M. In subsequent step S713, the demand management agent 61 predicts the total amount of power to be used in the current time slot. For this prediction, various known methods can be used, and for example, the total amount of power consumption at the time when the time slot ends can be calculated by extrapolation interpolation using statistics of power consumption in the current time slot.

In subsequent step S714, the demand management agent 61 determines whether the prediction value is larger than the available amount. Specifically, the demand management agent 61 compares the prediction value calculated in step S713 with the total amount of power of the non-conditional token in the current time slot read in step S711. The process proceeds to step S715 when the demand management agent 61 determines that the prediction value is larger than the available amount, and the process proceeds to step S717 when the agent determines that the prediction value is equal to or less than the available amount.

In step S715, the demand management agent 61 calculates a control cost for controlling the demand device 62, a cost for purchasing the limit token, and a cost for purchasing or validating the general-purpose token so that the prediction value becomes the available amount or less. In this step, the control cost of the demand device 62 stored in the demand device control management table 67 is referred to. In subsequent step S716, the demand management agent 61 adopts and executes the lowest option based on the calculation result in step S715. For example, in a case where it is determined that it is the lowest price to purchase and validate the general-purpose token, the demand management agent 61 communicates with the token management device 20 to purchase the general-purpose token and further performs the validation process in the current time slot.

In step S717, the demand management agent 61 determines whether it is time when the current time slot ends. The process returns to step S712 if the demand management agent 61 determines that the current time slot has not ended, and the process illustrated in FIG. 15 ends if the demand management agent determines that the current time slot ends.

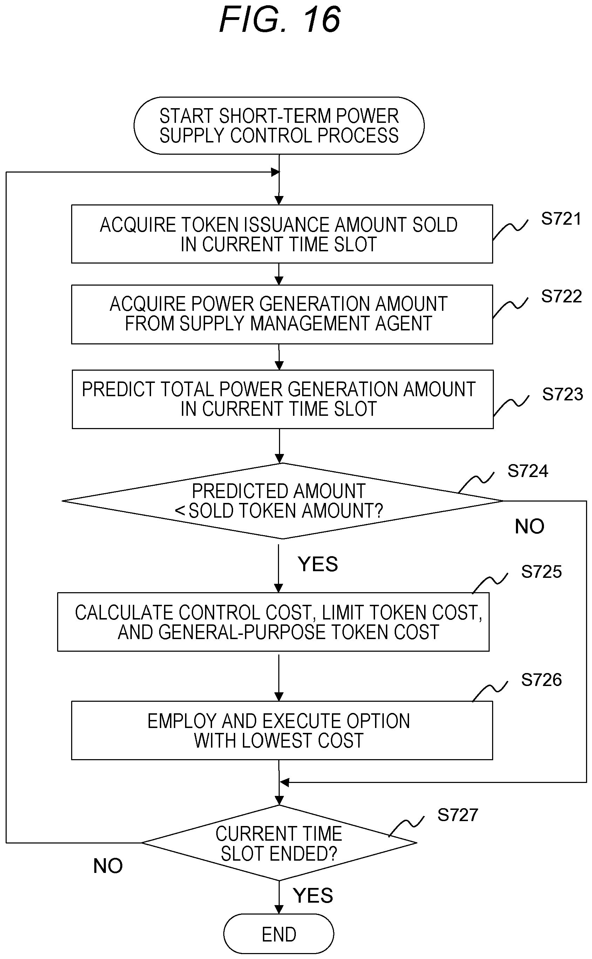

FIG. 16 is a flowchart illustrating a short-term power supply control process in which the power supply control program 12 starts to be executed immediately after S833. In this short-term power supply control process, the supply of power instructed from the reservation token generation device 10 is realized by focusing on the current time slot. In step S721, the power supply control program 12 reads the generated token management table 13 and acquires the token issuance amount sold in the current time slot, specifically, the total value of the power amount. However, this total value includes the amount of power of the general-purpose token validated for the current time slot.

In subsequent step S722, the power supply control program 12 acquires information on the current power generation amount from the demand management agent 61. In subsequent step S723, the power supply control program 12 predicts a total power generation amount in the current time slot. For this prediction, various known methods can be used, and for example, the total amount of power generation at the time when the time slot ends may be calculated by extrapolation interpolation using statistics of the power generation amount in the current time slot, or when the supply device 42 uses renewable energy, the total amount of power generation may be calculated based on a weather forecast.

In subsequent step S724, the power supply control program 12 determines whether the predicted value is larger than the sold token amount. Specifically, the power supply control program 12 compares the predicted value calculated in step S723 with the sold power amount in the current time slot read in step S721. The process proceeds to step S725 when the power supply control program 12 determines that the prediction value is smaller than the sold token amount, and the process proceeds to step S727 when the program determines that the prediction value is equal to or larger than the sold power amount.

In step S725, the power supply control program 12 calculates a control cost for controlling the supply device 42, a cost for purchasing the limit token from the token management device 20, and a cost for purchasing or validating the general-purpose token from another token management device 20 so that the prediction value becomes equal to or larger than the sales amount. In this step, the control cost of the supply device 42 and the like stored in the supply device control management table 14 are referred to. In subsequent step S726, the power supply control program 12 adopts and executes the lowest option based on the calculation result in step S725. For example, in a case where it is determined that it is the lowest price to purchase and activate the general-purpose token, the power supply control program 12 communicates with the token management device 20 to purchase the general-purpose token and further performs the activation processing in the current time slot. In this case, power is supplied from the supply device 42 managed by another reservation token generation device 10.

In step S727, the power supply control program 12 determines whether it is time when the current time slot ends. The process returns to step S721 when the power supply control program 12 determines that the current time slot is not ended, and the processing illustrated in FIG. 16 ends when the program determines that the current time slot is ended.

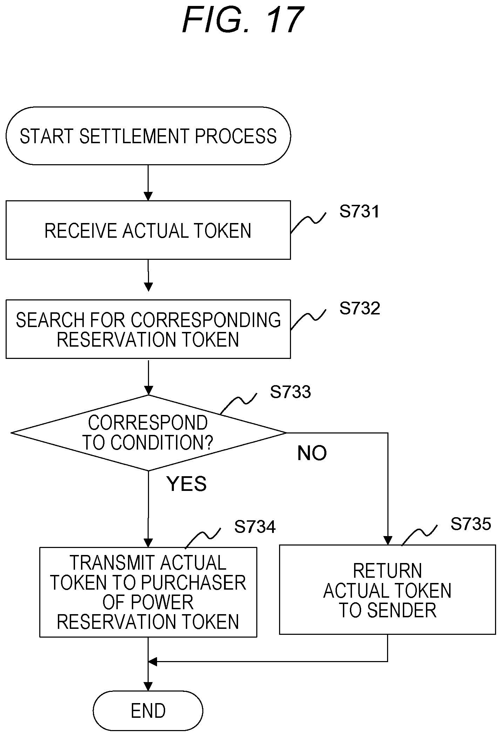

FIG. 17 is a flowchart illustrating settlement processing executed by the token settlement program 23 of the token management device 20 between S846 and S847 in the settlement phase. In step S731, the token settlement program 23 receives the result token from the supply management agent 41. In subsequent step S732, the token settlement program 23 refers to the reservation token management table 24 to search for the corresponding reservation token. In this step, the token settlement program 23 searches for the information stored in the reservation token management table 24 using the token ID of the power reservation token included in the result token.

In subsequent step S733, the token settlement program 23 determines whether a record corresponding to the condition has been found by the search in step S732. Specifically, the token settlement program 23 determines whether the combination of the token ID, the issuer ID, and the time slot included in the result token matches the information stored in the reservation token management table 24. The process proceeds to step S734 when the token settlement program 23 determines that there is a record corresponding to the condition, and the process proceeds to step S735 when the program determines that there is no record corresponding to the condition.

In step S734, the token settlement program 23 transmits the result token received in step S731 to the purchaser of the power reservation token, and ends the process illustrated in FIG. 17. In step S735, the token settlement program 23 returns the result token received in step S731 to the sender, and ends the process illustrated in FIG. 17.

According to the first embodiment described above, the following operational effects can be obtained.
(1) The power transaction method performed in the power transaction system S includes the reservation token generation device 10 issuing a power reservation token that is a right to use specific power that is power obtained by generating power using a specific type of energy; the reservation token generation device 10 supplying power in exchange for the power reservation token; and the result token generation device 30 issuing a result token indicating that the specific power supplied in exchange for the power reservation token has been used. Therefore, flexible and efficient power transaction can be realized. Specifically, a power generation company can sell electric power in advance without taking a risk about instability of power generation that is inevitable when using renewable energy. The consumer can purchase electric power suitable for his/her needs from various types of power generation products, and further reserve the electric power in advance, so that the demand can be scheduled. As the entire power system, since the supply and demand can be matched in advance, efficient operation can be performed.
(2) The result token includes an identifier for specifying a specific type of energy, a time when the specific power is used, and a power amount of the specific power used. Therefore, it is possible to trace power using the result token.
(3) The power reservation token includes a limit token in which a date and time when the specific power can be used is designated in advance, and a general-purpose token in which a date and time when the specific power can be used is not designated in advance. Therefore, it is possible to secure a variety of power products and to provide a wide range of options to both power generators and consumers.
(4) The limit token includes a limit token with cancellation condition in which power is not supplied under a predetermined condition and a limit token without cancellation in which power is supplied regardless of the predetermined condition. Therefore, it is possible to secure a variety of power products and to provide a wide range of options to both power generators and consumers.
(5) The power provided in exchange for the power reservation token is available at any power receiving point via the power grid G. Therefore, any type of power can be used from various places.
(6) The specific type of energy include at least one of solar power, wind power, wave power, geothermal power, natural gas, fossil fuel, hydraulic power, and nuclear power. Therefore, various types of power can be traded in advance.

### (First modification)

In the first embodiment described above, the token management program 22 transferred the power reservation tokens generated by the reservation token generation device 10 to the demand system 60 in units of power reservation tokens. However, the token management program 22 may arbitrarily divide the power reservation token and transfer the power reservation tokens to two or more entities. However, in this case, the sum of the available power amounts in the divided power reservation tokens is limited to be equal to or less than the available power amount in the power reservation token before the division. In addition, the token management program 22 cannot change the time slot in the limit token.

According to this modification, the following operational effects can be obtained in addition to the operational effects of the first embodiment described above.

(7) The power reservation token includes an amount of available power. The token management program 22 can divide and transfer the power reservation token to two or more entities. The sum of the available power amounts in the divided power reservation tokens is equal to or less than the available power amount in the power reservation token before the division. Therefore, the power reservation token can be more flexibly transacted.

### (Second modification)

The result token generation device 30 may issue the result token including the source of the power to the demand system 60 that uses the power output from the power storage device 52 by grasping the source of the power stored in the power storage device 52.

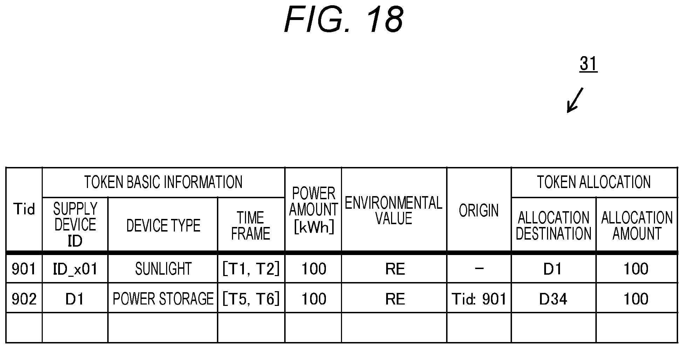

FIG. 18 is a diagram illustrating an example of the result token management table 31 stored in the result token generation device 30. The result token management table 31 includes a plurality of records, and each record has fields of a token ID, token basic information, a total power generation amount, a source, and a token assignment. The "token basic information" includes a supply device ID that specifies a supply source of power, a device type indicating a type of a device indicated by the ID, and a time slot indicating a time zone in which power is supplied. "Source" is information for specifying a token from which electric power described in the record is derived. The "token allocation" includes an "allocation destination" which is an identifier of a device to which the token is allocated, and an "allocation amount" which is an allocated power amount.

The first record in FIG. 18 is information about the token ID "901", indicating that the supply device using "sunlight" has supplied "100 kWh" of power to "D1". The second record in FIG. 18 is information about the token ID "902", indicating that the device "D1" has supplied "100 kWh" of power to "D34" and that this power comes from the token ID "901". That is, in this example, since the device "D1" releases the electric power accumulated at times T1 to T2 in times T5 to T6, and the accumulated electric power is obtained by solar power generation, a result token indicating that "D34" using this electric power uses the electric power obtained by solar power generation is issued.

### (Third modification)

The cancellation program 16 may create a condition for determining the necessity of cancellation instead of determining the necessity of cancellation for each limit token. The cancellation program 16 may transmit the created condition to the token management device 20, and the token management device 20 may determine the necessity of cancellation. However, in this case, the token management device 20 transmits the presence or absence of cancellation not only to the demand management agent 61 but also to the reservation token generation device 10. Upon receiving the notification regarding the cancellation of the limit token from the token management device 20, the reservation token generation device 10 reflects the information in the generated token management table 13.

### (Fourth modification)

The issuance of the power reservation token and the control of the power supply may be performed by different entities. For example, the token generation program 11, the power supply control program 12, and the cancellation program 16 illustrated in FIG. 4 may be installed in different devices.

### (Fifth modification)

The power reservation token may be traded as a compensation for money transfer, and in a case where the limit token with cancellation condition is cancelled, a compensation money may be paid from the token settlement program 23 of the token management device 20 to the demand management agent 61. However, the "money" and the "compensation money" may be any of cash, payment money, points, foreign currency, and the like.

### Second Embodiment

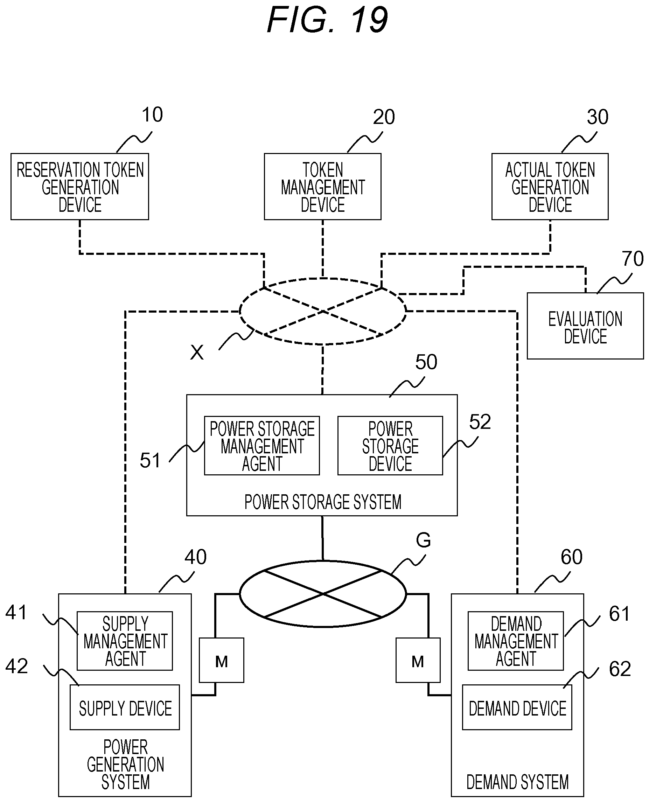

A second embodiment of a power transaction system will be described with reference to FIGS. 19 to 22. In the following description, the same components as those of the first embodiment are denoted by the same reference numerals, and differences will be mainly described. The points not specifically described are the same as those in the first embodiment. This embodiment is different from the first embodiment mainly in evaluating a reservation token generation device.

FIG. 19 is an overall configuration diagram of the power transaction system S in the second embodiment. The power transaction system S in the second embodiment is different in that an evaluation device 70 is provided in addition to the configuration in the first embodiment. Hereinafter, the configuration of the evaluation device 70 will be mainly described, and the description of the same configuration and operation as those of the first embodiment will be omitted. The evaluation device 70 is connected to another device via the network X. Since the hardware configuration of the evaluation device 70 is the same as that of the reservation token generation device 10, the description thereof will be omitted.

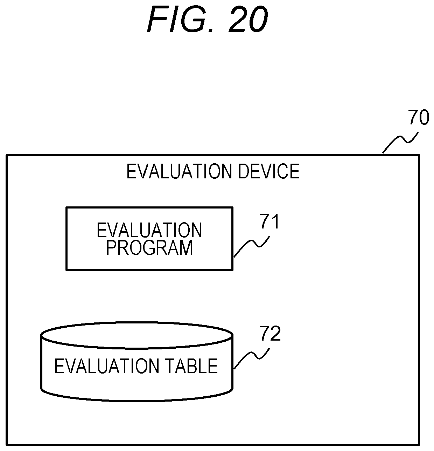

FIG. 20 is a functional configuration diagram of the evaluation device 70. The evaluation device 70 includes an evaluation program 71 and an evaluation table 72. The evaluation program 71 evaluates each of the reservation token generation devices 10 and writes the evaluation result in the evaluation table 72. Since the token ID of the power reservation token generated by each reservation token generation device 10 is also written in the evaluation table 72, it can be said that each of the power reservation tokens is evaluated via the generated reservation token generation device 10.

Various methods can be used for the evaluation by the evaluation program 71. Here, two examples of the evaluation method A and the evaluation method B will be described. Evaluation is performed based on power generation capacity in the evaluation method A, and evaluation is performed based on past results in the evaluation method B. In the following description, for convenience of explanation, the evaluation is set to 5 stages of 1 to 5, and the larger the number, the higher the evaluation, and "1" is the lowest rank. The evaluation program 71 may use an evaluation result of any one of a plurality of evaluation methods, or may use an average of evaluation values obtained by a plurality of evaluation methods.

### (Evaluation method A)

In this embodiment, each reservation token generation device 10 is associated with a specific supply device 42. The type and maximum capacity of the power supplied by the supply device 42 are described in the supply device control management table 14 as described in the first embodiment. In the evaluation method A, the evaluation program 71 first adds the maximum capacities of the power types of all the supply devices 42 associated with each reservation token generation device 10. Then, the evaluation program 71 determines the evaluation by comparing the sum of the maximum capacities with the sum of the maximum capacities for each time slot of the issued limit token.

For example, in a case where the limit token exceeding the sum of the maximum capacities of the supply devices 42 is issued even with any one type of power, the evaluation program 71 sets the evaluation of the reservation token generation device 10 to the lowest "1". In addition, the evaluation program 71 sets the evaluation of the reservation token generation device 10 to "2" in a case where the reservation token generation device 10 is not limited to the evaluation "1" and the limit token exceeding 90% of the sum of the maximum capacities of the supply devices 42 is issued for the power to use any renewable energy. The above is an example of the evaluation method A.

### (Evaluation method B)

In the evaluation method B, information of "token settlement" of the reservation token management table 24 is used. Specifically, the evaluation program 71 specifies the token ID of the power reservation token issued in the past by the reservation token generation device 10 to be evaluated, and increases the evaluation value as the result token satisfaction rate corresponding to the token ID is higher. For example, the evaluation program 71 may evaluate an average value of the result token satisfaction rates, or may set a lowest value among all the result token satisfaction rates as an evaluation target.

For example, the evaluation program 71 can set the evaluation to the highest "5" in a case where the result token satisfaction rates of the power reservation tokens issued in the past by a certain reservation token generation device 10 are all "100%", and can set the evaluation to "4" in a case where the average value of the result token satisfaction rates is "80%" or more and less than "100%". The above is an example of the evaluation method B.

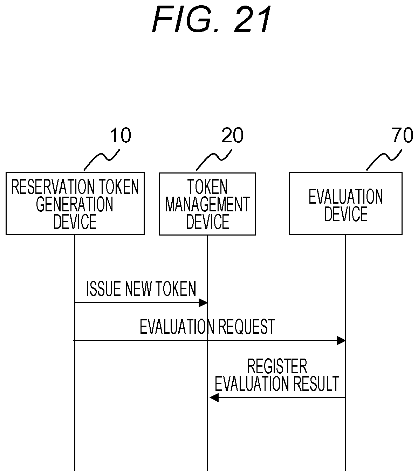

FIG. 21 is a time chart illustrating an example of a timing at which the evaluation device 70 operates. In the second embodiment, when the reservation token generation device 10 issues a new power reservation token, an evaluation request is transmitted to the evaluation device 70. Upon receiving the evaluation request, the evaluation device 70 starts operation, and transmits an evaluation result and an identifier for specifying the reservation token generation device 10 to be evaluated to the token management device 20. The token management device 20 adds the evaluation information received from the evaluation device 70 to the information of the power reservation token received from the reservation token generation device 10 and records the information in the reservation token management table 24. That is, in this embodiment, the field of an evaluation value is added to the reservation token management table 24. Note that the information on the evaluation value is provided to the demand management agent 61.

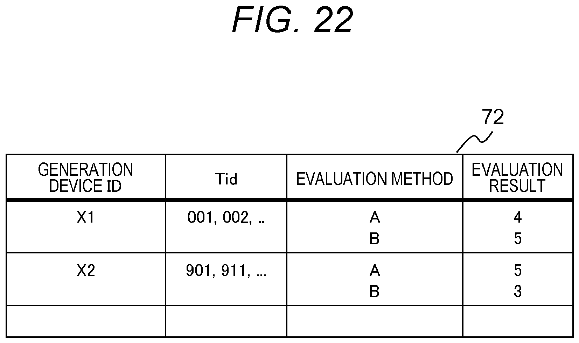

FIG. 22 is a diagram illustrating an example of the evaluation table 72. The evaluation table 72 includes a plurality of records. Each record in the evaluation table 72 includes a generation device ID which is an identifier of the reservation token generation device 10, a token ID list of the power reservation token generated by the reservation token generation device 10, a used evaluation method, and an evaluation result. For example, in the example illustrated in FIG. 22, it can be seen that the reservation token generation device 10 with the identifier "X1" has the evaluation result of "4" in the evaluation method A and the evaluation result of "5" in the evaluation method B, and the token IDs "001" and "002" have these evaluations.

According to the second embodiment described above, the following operational effects can be obtained.

(8) The power transaction system S in the second embodiment includes the evaluation device 70 evaluating the reservation token generation device 10 and giving the evaluation of the reservation token generation device 10 that has generated the power reservation token to the power reservation token. Therefore, additional information for selecting the power reservation token can be provided to the consumer.

(9) The evaluation method A, which is one of the evaluations of the reservation token generation device 10 by the evaluation device 70, is based on the power generation capacity of the supply device 42 and the sum of power amounts at the same use date and time issued by the reservation token generation device 10, that is, the same time slot. Therefore, the power reservation token can be evaluated from the information supporting the issuance of the power reservation token.

(10) The evaluation method B, which is one of the evaluations of the reservation token generation device 10 by the evaluation device 70, is based on the result of supplying power in exchange for the generated power reservation token. Therefore, the power reservation token can be evaluated based on the past result of the issuing entity of the power reservation token.

In the above-described embodiments and modifications, the configuration of the functional block is merely an example. Some functional configurations illustrated as separate functional blocks may be integrally configured, or a configuration illustrated in one functional block diagram may be divided into two or more functions. In addition, some of the functions of each functional block may be included in another functional block.

The above-described embodiments and modifications may be combined. Although various embodiments and modifications have been described above, the present invention is not limited to these contents. Other aspects conceivable within the scope of the technical idea of the present invention are also included within the scope of the present invention.

### Reference Signs List

- 10: reservation token generation device
- 11: token generation program
- 12: power supply control program
- 16: cancellation program
- 20: token management device
- 22: token management program
- 23: token settlement program
- 30: result token generation device
- 40: power generation system
- 41: supply management agent
- 42: supply device
- 50: power storage system
- 51: power storage management agent
- 52: power storage device
- 60: demand system
- 61: demand management agent
- 62: demand device
- 63: schedule creation program
- 68: operation schedule
- 70: evaluation device

## Claims

1. A power transaction system comprising:
a token generation unit that issues a power reservation token that is a right to use specific power that is power obtained by generating power using a specific type of energy;
a power supply control unit that supplies power in exchange for the power reservation token; and
a result token issuing unit that issues a result token indicating that the specific power supplied in exchange for the power reservation token is used.

2. The power transaction system according to claim 1, wherein the result token includes an identifier for specifying the specific type of energy, a time when the specific power is used, and an amount of power of the specific power used.

3. The power transaction system according to claim 1, wherein the power reservation token includes a limit token in which a date and time when the specific power can be used is designated in advance, and a general-purpose token in which a date and time when the specific power can be used is not designated in advance.

4. The power transaction system according to claim 3, wherein the limit token includes a limit token with cancellation condition in which power is not supplied under a predetermined condition and a limit token without cancellation in which power is supplied regardless of the predetermined condition.

5. The power transaction system according to claim 1, further comprising an evaluation unit that evaluates the token generation unit and gives the evaluation of the token generation unit that has generated the power reservation token to the power reservation token.

6. The power transaction system according to claim 5, wherein
the token generation unit is associated with a supply device that generates power,
the power reservation token includes a limit token in which a use date and time which is the date and time when the specific power can be used and an available power amount are designated in advance, and
the evaluation of the token generation unit by the evaluation unit is based on a sum of power generation capacity of the supply device and the power amount issued by the token generation unit at same use date and time.

7. The power transaction system according to claim 5, wherein the evaluation of the token generation unit by the evaluation unit is based on a result in which the power supply control unit supplies power in exchange for the generated power reservation token.

8. The power transaction system according to claim 1, wherein
the power reservation token includes an amount of available power, the power transaction system further comprising a token management unit that divides the power reservation token and transfers the power reservation token to two or more entities, and
a sum of available power amounts in the divided power reservation tokens is equal to or less than an available power amount in the power reservation token before the division.

9. The power transaction system according to claim 1, wherein the power transaction system is available at any power reception point.

10. The power transaction system according to claim 1, wherein the specific type of energy includes at least one of solar power, wind power, wave power, geothermal power, natural gas, fossil fuel, hydraulic power, and nuclear power.

11. The power transaction system according to claim 4, wherein the power reservation token is traded as a compensation for money transfer, the power transaction system further comprising a token settlement unit that pays a compensation money to a purchaser of the limit token with cancellation condition when power is not supplied in exchange for the limit token with cancellation condition.

12. The power transaction system according to claim 1, further comprising a demand system that acquires the power reservation token and receives supply of the specific power in exchange for the power reservation token.

13. A power transaction method comprising:
issuing a power reservation token that is a right to use specific power that is power obtained by generating power using a specific type of energy;
supplying power in exchange for the power reservation token; and
issuing a result token indicating that the specific power supplied in exchange for the power reservation token is used.
